# FASCICULE DE BREVET EUROPEEN

(11) **EP 0 487 161 B1**
(45) Date de publication et mention de la délivrance du brevet: **19.01.1994**
(21) Numéro de dépôt: 91203011.1
(22) Date de dépôt: 19.11.1991
(51) Int. Cl.: B67C 3/30, C06B 39/00

(54) **Procédé de remplissage de fûts par des liquides non miscibles et ses applications, notamment à l'enfutage du phosphore blanc**
Verfahren zum Abfüllen nicht mischbarer Flüssigkeiten in Fässer und dessen Anwendungen, insbesondere für die Abfüllung von weissem Phosphor
Method for filling drums with non mixible liquids and its application, in particular for barreling white phosphorus

(30) Priorité: 23.11.1990 FR 9014633
(43) Date de publication de la demande: 27.05.1992
(73) Titulaire: ELF ATOCHEM S.A., 92800 Puteaux (FR)
(72) Inventeur: Miscevic, Michel, F-73220 Epierre (FR); Cochet, Claude, F-73130 La Chambre (FR)

(56) Documents cités:
- CH-A- 425 509
- US-A- 3 908 719
- US-A- 4 932 445

## Description

La présente invention concerne un procédé de remplissage de fûts avec des liquides non miscibles, notamment avec du phosphore blanc liquide et de l'eau.

L'invention concerne également un dispositif pour la mise en oeuvre du présent procédé.

Compte tenu de sa grande réactivité, le phosphore blanc nécessite d'être manipulé avec précaution. En effet, très oxydable, il s'enflamme spontanément à l'air de sorte qu'il est nécessaire pour le stocker ou le véhiculer de le recouvrir par un liquide inerte tel que l'eau.

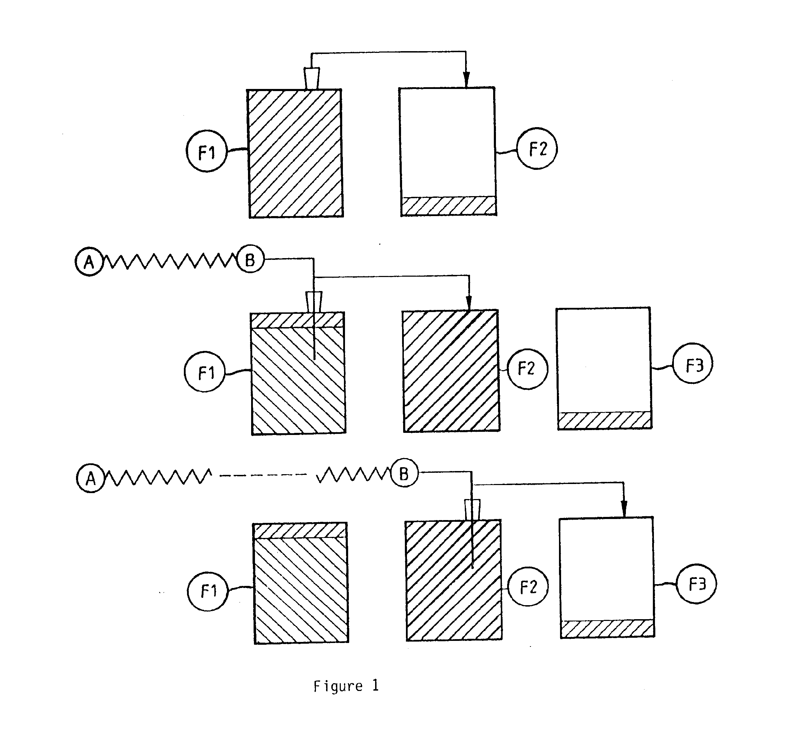

Pour effectuer le remplissage notamment de fûts métalliques avec du phosphore blanc liquide, on procède habituellement de la façon suivante, comme indiqué sur la figure 1 :
- on remplit totalement un premier fût (F1) d'eau chaude (60°C) et un second fût (F2) avec une quantité d'eau chaude équivalente à la quantité nécessaire au recouvrement du phosphore du fût (F1),
- on adapte sur la bonde du premierfût un entonnoir comportant une tubulure latérale et on relie le fût (F2) à la tubulure dudit entonnoir par une conduite en équerre,
- on introduit une canne rigide maintenue par un opérateur B dans l'entonnoir, cette canne étant reliée par un flexible à une vanne d'une cuve de stockage de phosphore liquide, cette vanne pouvant être ouverte ou fermée par un opérateur A,
- l'opérateur A ouvre la vanne et le phosphore liquide remplit le fût (F1) tout en déplaçant l'eau chaude dudit fût (F1) dans le fût (F2) et ce, jusqu'à ce que ledit fût (F2) soit totalement rempli d'eau chaude. Ceci étant constaté par l'opérateur B, ce dernier donne ordre à l'opérateur A de fermer la vanne.

Ace stade, le fût (F1) est rempli d'une quantité déterminée de phosphore blanc liquide recouverte de la quantité d'eau chaude équivalente à la quantité d'eau se trouvant dans le fût (F2).

Pour effectuer le remplissage d'autres fûts on effectue le remplissage d'un fût (F3) d'une quantité d'eau chaude équivalente à la quantité d'eau de recouvrement du phosphore, on adapte l'entonnoir sur la bonde du fût (F2).

On relie le fût (F2) au fût (F3) et on effectue le remplissage du fût (F2) avec du phosphore liquide comme précédemment et ainsi de suite.

L'opération du remplissage terminée, on laisse refroidir les fûts pendant 24 heures à l'air ambiante puis on effectue les opérations suivantes :

On procède à l'ajustage de la quantité d'eau au-dessus du phosphore blanc solidifié de façon à respecter le vide d'air obligatoire de sécurité au-dessus de l'eau et le poids brut des fûts. Cet ajustage s'effectue par siphonage de l'eau en excès. Les fûts sont passés un par un sur une bascule puis on procède à la fermeture des fûts qui sont ensuite véhiculés un par un par un chariot élévateur vers une zone de stockage.

Cette façon de procéder présente de nombreux inconvénients :
- Contrôle difficile du niveau d'eau dans le fût "second" qui risque de provoquer un débordement du phosphore sur le fût en cours de remplissage et par suite des risques d'inflammation et de brûlures de l'opérateur 3.
- Mauvaise synchronisation entre les deux opérateurs aboutissant au même résultat que précédemment.
- Difficulté de passage de la canne qui est encore remplie de phosphore blanc liquide d'un fût à l'autre avec des risques de projections.

Le dévissage et le vissage de l'entonnoir à chaque fût, la quantité de phosphore introduite qui reste approximative, le siphonage et le passage de la canne d'un fût à l'autre avec risque de rupture du flexible sont des manipulations qui, outre les dangers qu'elles présentent, sont longues et de nature à abaisser la productivité.

Le document US 3908719 concerne un procédé, resp. un dispositif, selon le préambule de la revendication 1, resp. revendication 11, pour le remplissage de fûts avec du phosphore jaune liquide à l'aide d'une buse ou lance de remplissage.

Celle-ci est constituée essentiellement d'un tube de commande pourvu d'une pluralité de perforations et relié à sa partie supérieure à un organe cylindrique avec un orifice pour la connexion d'une unité de commande au moyen d'un élément de connexion tubulaire. Un tube support de buse qui entoure coaxialement le tube de commande et est pourvu dans sa partie supérieure d'une arrivée d'eau chaude porte à son extrémité inférieure un cylindre de commande avec un piston de commande percé d'un trou. Le piston de commande est fixé à une tubulure au moyen d'un fond conique. Ason extrémité supérieure, le tube support de buse a un presse-étoupe avec un flasque de support, la tubulure entourant coaxialement le tube support de buse de façon à former une chambre annulaire recevant le phosphore jaune. Une chemise de chauffage est disposée autour de la tubulure de façon à former une chambre de chauffage, la chemise de chauffage étant traversée dans sa partie supérieure premièrement par un double tube sous pression alimentant la chambre de chauffage en eau chaude et alimentant la chambre annulaire en phosphore jaune et deuxièmement par une sortie d'eau. Un flasque de support est fixé à la chemise de chauffage, et une soupape de décharge d'eau à ressort est prévue dans la portion d'extrémité inférieure du piston de commande.

Le fût à remplir est disposé sur un plateau tournant puis amené devant un poste de remplissage. La flasque de support inférieure de la buse est appliquée sur le couvercle du fût à remplir. Celui-ci doit être rempli quasi totalement d'eau chaude.

Des sondes de niveau sont disposées sur le rebord du fût.

La partie inférieure de la buse est positionnée dans la partie haute du fût Elle est immergée dans l'eau.

Cette façon de procéder présente l'inconvénient majeur de remplir préalablement et quasi totalement le fût en eau chaude puis de l'éliminer progressivement lors du remplissage du fût par le phosphore jaune. La buse est alimentée par les fluides-eau chaude et phosphore liquide- sous pression. Ceci présente l'inconvénient d'entraîner d'éventuelles fuites si les conditions d'herméticité viennent à défaillir.

On a maintenant trouvé un procédé de remplissage de fûts avec deux liquides non miscibles inertes entre eux, par lequel on positionne le dit fût à remplir d'une façon telle qu'au moins une des ouvertures dudit fût se trouve au dessous d'une canne de remplissage, à introduire cette canne de remplissage d'une façon telle que son extrémité soit proche du fond du fût, à introduire une quantité déterminée Q1 du liquide le moins dense, puis à introduire une quantité Q2 du liquide le plus dense et ensuite à rincer la canne de remplissage avec une quantité déterminée Q3 du liquide le moins dense et à retirer la canne de remplissage.

Avantageusement, la canne de remplissage peut être retirée en deux temps, d'abord partiellement favorisant l'égoutage du liquide de rinçage puis totalement.

Complémentairement, le fût à remplir peut être préalablement disposé sur un poste de pesage.

Un avantage dudit procédé est que toutes ou parties des opérations peuvent être effectuées automatiquement.

Ce procédé s'applique tout particulièrement lorsque le liquide le plus dense est oxydable, c'est-à-dire qu'il concerne tout liquide qui au contact de l'oxygène de l'air peut notamment se dégrader ou s'enflammer spontanément.

Il s'applique tout particulièrement au remplissage de fût par du phosphore blanc liquide et de l'eau.

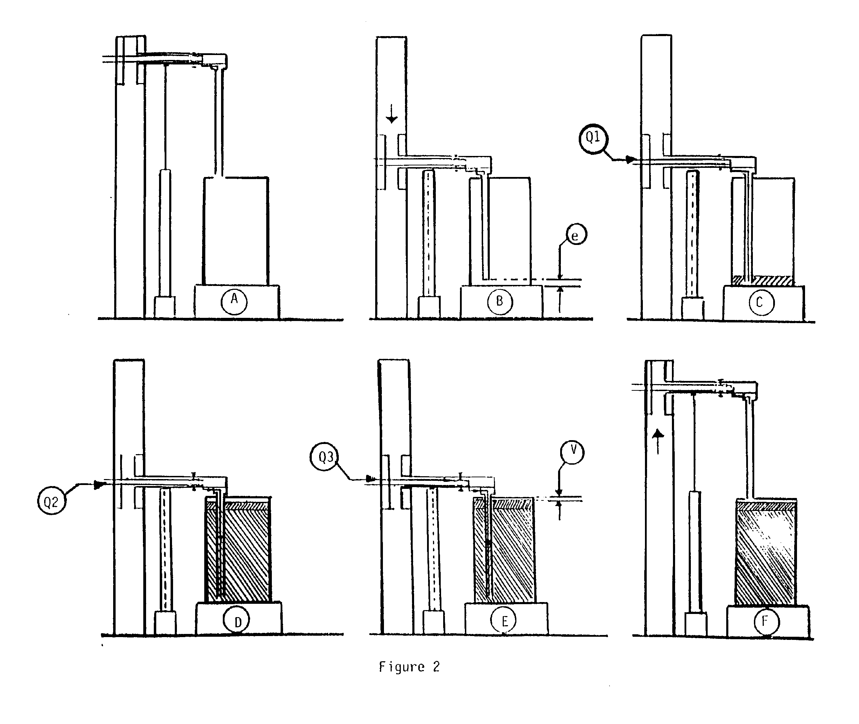

Le remplissage d'un fût par du phosphore blanc liquide et de l'eau selon le procédé de l'invention consiste à effectuer les opérations ci-après représentées sur la figure 2.
- Opération A : disposer sur un poste de pesage un fût d'une façon telle qu'au moins une des ouvertures dudit fût à remplir soit placée au dessous de l'extrémité d'une canne plongeante.
- Opération B : abaisser la canne jusqu'à ce que son extrémité soit proche du fond du fût.

La distance (e) entre le fond du fût et l'extrémité de la canne plongeante est en général au plus égale à 3 cm et de préférence comprise entre 0,5 cm et 2,5 cm.
- Opération C : envoyer une quantité déterminée Q1 d'eau chaude.
- Opération D : envoyer une quantité déterminée Q2 de phosphore blanc liquide.
- Opération E : rincer la canne de remplissage avec une quantité déterminée Q3 d'eau chaude.
- Opération F : retirer la canne de remplissage.

Avantageusement, le fût rempli est ensuite véhiculé hors de la zone de remplissage où il sera fermé puis convoyé vers une zone de stockage.

Le remplissage de la quantité Q2 de phosphore blanc liquide peut être effectué à débit constant mais de préférence on utilise un débit en phosphore blanc liquide variable.

On utilise avantageusement un faible débit en dé- butetfin de remplissage, ledit débit P1 étant au moins égal à 0,8 t/h et de préférence compris entre 0,9 t/h et 1,1 t/h, et un débit plus important pendant le reste du temps de remplissage, ce dit débit P2 étant au moins égal à 8 t/h et de préférence compris entre 9 t/h et 11 t/h.

Les quantités d'eau Q1 et Q3, respectivement introduites en C puis en E (eau de rinçage de la canne), correspondent à la masse d'eau nécessaire au recouvrement du phosphore blanc liquide et sont calculées d'une façon telle qu'un vide d'air (V) se trouve au-dessus de la couche d'eau.

Le phosphore blanc est véhiculé à une température supérieure à son point de fusion et de préférence à une température comprise entre 55°C et 65°C.

La température de l'eau utilisée pour le remplissage et le rinçage de la canne est en général au moins égale à 50°C et de préférence comprise entre 60°C et 70°C.

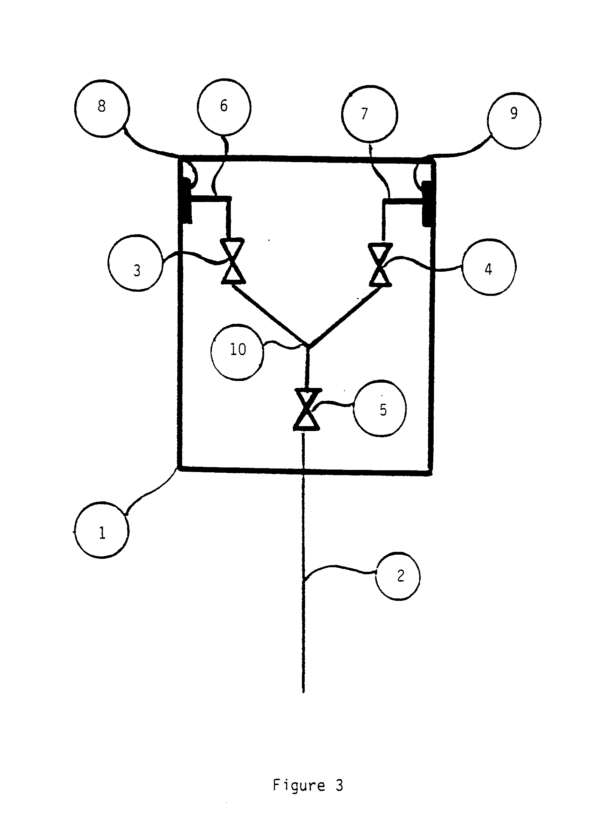

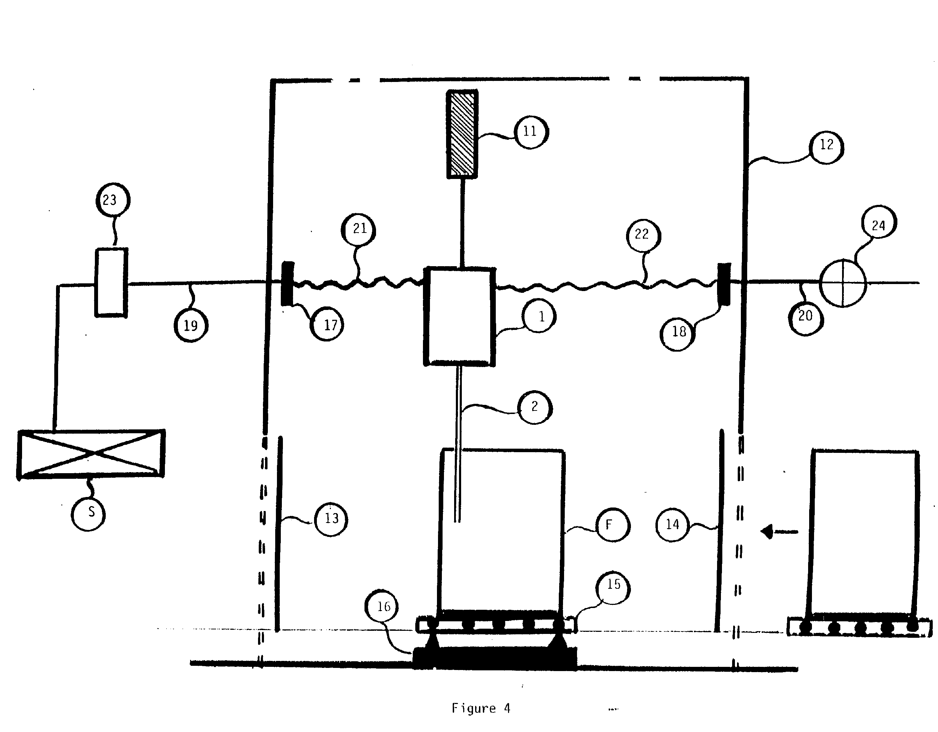

Ce procédé peut être mis en oeuvre au moyen d'un dispositif tel que représenté sur les figures 3 et 4.

Ce dispositif comprend une tête de distribution (1), munie d'au moins une canne plongeante (2) et sensiblement verticale et d'au moins trois vannes (3), (4) et (5) dont deux au moins (3) et (4) peuvent être reliées par des conduites (6) et (7) à des raccords (8) et (9) permettant l'alimentation de ladite tête de distribution respectivement par le liquide le plus dense et le liquide le moins dense et au moins une vanne (5) - dite vanne de sortie-reliée à la canne plongeante (2) et aux vannes (3), (4) par une conduite (10) qui peut notamment être en forme de Y, des moyens pour positionner un fût à remplir d'une façon telle qu'au moins une des ouvertures dudit fût se trouve au dessous d'une canne plongeante, des moyens permettant d'amener ladite canne plongeante d'une façon telle que son extrémité soit proche du fond du fût, des moyens permettant la manoeuvre séquentielle des vannes permettant d'introduire une quantité déterminée Q1 en liquide le moins dense, puis à introduire une quantité déterminée Q2 en liquide le plus dense et enfin à introduire un quantité déterminée Q3 en liquide le moins dense pour rincer la canne plongeante, des moyens pour retirer la canne plongeante.

Cette tête de distribution, éventuellement fixée sur un vérin (11), peut être disposée notamment dans une cabine (12), munie d'ouvertures constituées par des volets (13) et (14) pouvant s'ouvrir et se fermer automatiquement permettant l'entrée et la sortie du fût à remplir. Ce dit fût pouvant se trouver sur un transrouleur motorisé (15).

La cabine (12) peut être équipée d'une bascule (16) sur laquelle le transrouleur (15) et le fût (F) à remplir reposent pendant les opérations de remplissage.

Cette cabine peut être munie de raccords tels que (17) et (18) pouvant être reliés notamment à des conduites extérieures (19) et (20).

Les raccords (8) et (9) de la tête de distribution (1) peuvent être respectivement reliés aux raccords (17) et (18) par des flexibles (21) et (22) d'une longueurtel- le qu'elle puisse permettre le mouvement vertical de va et vient de la tête de distribution (1).

La canne plongeante (2) aura une longueur suffisante pour permettre l'introduction des liquides à une distances aussi faible que possible du fond du fût à remplir.

S'agissant du remplissage du fût (F) par du phosphore blanc liquide et de l'eau, le phosphore blanc liquide provenant d'un stockage (S) est amené à la tête de distribution (1) au moyen de la conduite (19) et du flexible (21). Un débitmètre massique (23) avantageusement placé avant le raccord (17) permet de confirmer avec exactitude les quantités de phosphore liquide délivrées.

L'eau chaude est amenée à la tête de distribution (1) par la conduite (20) et le flexible (22).

Un compteur d'eau (24) avantageusement placé avant le raccord (18) permet de confirmer avec exactitude les quantités d'eau délivrées.

Les opérations de remplissage d'eau chaude (étape C, figure 2), de remplissage de phosphore blanc liquide (étapes D, figure 2), de rinçage de la canne avec de l'eau chaude (étape E, figure 2) et de pesage des quantités d'eau chaude 0₁ et Q₃ et de phosphore blanc liquide Q₂ peuvent être contrôlées automatiquement avec deux microprocesseurs doublés par des compteurs.

Les caractéristiques des autres dispositifs utilisés pour la mise en oeuvre du procédé selon l'invention tels que appareils d'instrumentation (thermomètres, capteurs de position,) et d'automatisme (dispositifs d'asservissement) sont connus de l'homme du métier et ne constituent pas en elles-mêmes l'objet de la présente invention.

La cabine (12) peut être munie de dispositifs de sécurité non représentés sur la figure 4 tels que :
- cuvette de rétention étanche,
- extracteur de fumées,
- pulvérisateurs d'eau,
- arrét d'urgence.

Le présent procédé conforme à l'invention présente de nombreux avantages. Ainsi il supprime quasi totalement les opératoires manuelles longues et dangereuses, et par conséquent assure des conditions de travail plus sécurisantes et une protection plus efficace du personnel.

Il permet d'obtenir une pesée exacte des liquides à conditionner.

Il permet de diminuer d'une façon considérable la durée de remplissage d'un fût et par suite augmente la productivité.

### L'exemple suivant illustre l'invention

Des fûts de 215 1 sont placés sur des transrou- leurs motorisés lesquels sont véhiculés jusqu'à la cabine (12).

Lorsque le volet (14) s'ouvre automatiquement, un transrouleur et son fût (F) se déplace et se positionne sur la bascule (16) puis un dispositif électronique effectue la recherche de l'ouverture du fût de façon à positionner celle-ci juste au dessous de l'extrémité de la canne plongeante comme représenté en (A) de la figure 2. Selon un programme préétabli il y a abaissement de la tête (1) amenant l'extrémité de la canne plongeante à 2 cm du fond du fût (F) puis ouverture des vannes (4) et (5) ce qui permet d'effectuer le remplissage avec 12 d'eau chaud à 60°C, fermeture de la vanne (4) puis ouverture de la vanne (3) et introduction de 15 Kg, 300 Kg et 15 Kg de phosphore blanc liquide à 60°C selon des débits respectifs de :
- 0,9 t/h (petit débit)
- 9,0 t/h (grand débit)
- 0,9 t/h (petit débit),

fermeture de la vanne (3) et ouverture de la vanne (4) et introduction de 2 1 d'eau chaude effectuant ainsi le rinçage de la canne plongeante et de la conduite (10), fermeture des vannes (4) et (5) et relèvement partiel de la tête (1) de façon à ce que la canne puisse s'égoutter puis relèvement maximal, le transrouleur se dirige ensuite vers l'ouverture (13) où le volet s'ouvre automatiquement alors qu'un autre fût arrive par (14).

Le fût ainsi rempli est fermé manuellement, étiqueté puis acheminé automatiquement vers une zone de stockage.

Le poids de phosphore conditionné est de 330 kg et le remplissage a nécessité 10 mn.

Pour conditionner une tonne de phosphore blanc liquide en fûts de 215 litres il faut compter environ 30 mn.

A titre comparatif, il fallait compter par la méthode "manuelle" environ 2 H 30 pour conditionner la même quantité dans des fûts identiques.

## Revendications

1. Procédé de remplissage de fûts avec deux liquides non miscibles inertes entre eux, par lequel on positionne le dit fût à remplir d'une façon telle qu'au moins une des ouvertures dudit fût se trouve au-dessous d'une canne de remplissage, caractérisé en ce qu'il consiste à introduire cette canne de remplissage d'une façon telle que son extrémité soit proche du fond du fût, à introduire une quantité déterminée Q1 du liquide le moins dense, puis à introduire une quantité Q2 du liquide le plus dense et ensuite à rincer la canne de remplissage avec une quantité déterminée Q3 du liquide le moins dense et à retirer la canne de remplissage.

2. Procédé selon la revendication 1, caractérisé en ce que le fût à remplir est préalablement disposé sur un poste de pesage.

3. Procédé selon la revendication 1, caractérisé en ce que la canne de remplissage est retirée d'abord partiellement puis totalement.

4. Application du procédé selon l'une quelconque des revendications 1 à 3 au remplissage de fûts avec deux liquides dont le plus dense est oxydable.

5. Application selon la revendication 4 dans laquelle le liquide le plus dense est le phosphore blanc liquide.

6. Application du procédé selon l'une quelconque des revendications 1 à 3 au remplissage de fûts par du phosphore blanc liquide et de l'eau.

7. Application selon la revendication 6 dans laquelle le remplissage d'un fût par du phosphore blanc liquide et de l'eau consiste à :
disposer sur un poste de pesage un fût d'une façon telle qu'au moins une des ouvertures dudit fût à remplir soit placée au dessous de l'extrémité d'une canne plongeante,
^{>} abaisser la canne jusqu'à ce que son extrémité soit proche du fond du fût,
> envoyer une quantité déterminée Q1 d'eau chaude,
> envoyer une quantité déterminée Q2 de phosphore blanc liquide,
> rincer la canne de remplissage avec une quantité déterminée Q3 d'eau chaude,
, retirer la canne de remplissage.

8. Application selon la revendication 7 dans laquelle la distance entre le fond du fût et l'extrémité de la canne plongeante est au plus égale à 3 cm et de préférence comprise entre 0,5 cm et 2,5 cm.

9. Application selon la revendication 7 dans laquelle le débit de phosphore blanc liquide est variable.

10. Application selon la revendication 9 dans laquelle le débit de phosphore blanc liquide en début et fin de remplissage est au moins égal à 0,8 t/h et de préférence compris entre 0,9 t/h et 1,1 t/h, et pendant le reste du temps du remplissage est au moins égal à 8 t/h et de préférence compris entre 9 t/h et 11 t/h.

11. Dispositif permettant la mise en oeuvre du procédé selon l'une quelconque des revendications 1 à 10, ledit dispositif comprenant une tête de distribution (1), munie d'au moins une canne plongeante (2) sensiblement verticale et des moyens pour positionner un fût à remplir d'une façon telle qu'au moins une des ouvertures dudit fût se trouve au dessous de la canne plongeante, caractérisé en ce que la tête de distribution comprend au moins trois vannes (3), (4) et (5) dont deux au moins (3) et (4) peuvent être reliées par des conduites (6) et (7) à des raccords (8) et (9) permettant l'alimentation de ladite tête de distribution (1) respectivement par le liquide le plus dense et le liquide le moins dense et au moins une vanne (5) -dite vanne de sortie-reliée à la canne plongeante (2) et aux vannes (3) et (4) par une conduite (10), et que le dispositif comprend des moyens permettant d'amener ladite canne plongeante d'une façon telle que son extrémité soit proche du fond du fût, des moyens permettant la manoeuvre séquentielle des vannes permettant d'introduire une quantité déterminée Q1 en liquide le moins dense, puis à introduire une quantité déterminée Q2 en liquide le plus dense et enfin à introduire un quantité déterminée Q3 en liquide le moins dense pour rincer la canne plongeante, des moyens pour retirer la canne plongeante.

12. Dispositif selon la revendication 11, caractérisé en ce que la tête de distribution (1) est disposée dans une cabine (12), munie de raccords (17) et (18) reliés respectivement à des conduites extérieures (19) et (20) et aux raccords (8) et (9) par des flexibles (21) et (22).

13. Dispositif selon la revendication 12, caractérisé en ce que la cabine (12) est équipée d'une bascule (16).

14. Dispositif selon l'une quelconque des revendications 11 et 12 caractérisé en ce que la tête de distribution (1) est fixée sur un vérin (11).

15. Dispositif selon la revendication 12, caractérisé en ce qu'un débimètre massique (23) est placé avant le raccord (17).

16. Dispositif selon la revendication 12, caractérisé en ce qu'un compteur (24) est placé avant le raccord (18).

## Patentansprüche

1. Verfahren zur Abfüllung von Fässern mit zwei nicht mischbaren, nicht miteinander reagierenden Flüssigkeiten, in dem das genannte zu füllende Faß so angeordnet wird, daß sich mindestens eine der Öffnungen des genannten Fasses unterhalb eines Einfüllstutzens befindet, dadurch gekennzeichnet, daß es darin besteht, den Füllstutzen so einzuführen, daß sich dessen Ende kurz über dem Boden des Fasses befindet, eine bestimmte Menge Q1 der weniger dichten Flüssigkeit einzugeben, dann eine Menge Q₂ der dichteren Flüssigkeit einzugeben und anschließend den Füllstutzen mit einer bestimmten Menge Q₃ der weniger dichten Flüssigkeit zu spülen und den Füllstutzen zurückzuziehen.

2. Verfahren nach Anspruch 1, dadurch gekennzeichnet, daß das zu füllende Faß zuvor auf eine Wägeeinrichtung gestellt wird.

3. Verfahren nach Anspruch 1, dadurch gekennzeichnet, daß der Füllstutzen zunächst teilweise, dann ganz zurückgezogen wird.

4. Anwendung des Verfahrens nach einem der Ansprüche 1 bis 3 zur Füllung von Fässern mit zwei Flüssigkeiten, von denen das dichtere oxydierbar ist.

5. Anwendung nach Anspruch 4, in der die dichtere Flüssigkeit flüssiger weisser Phosphor ist.

6. Anwendung des Verfahrens nach einem der Ansprüche 1 bis 3 zur Füllung von Fässern mit flüssigem weissen Phospohor und Wasser.

7. Anwendung nach Anspruch 6, in der die Abfüllung eines Fasses mit flüssigem weissen Phosphor und Wasser aus:
- dem Stellen eines Fasses auf eine Wägeeinrichtung, so daß mindestens eine der Öffnungen des genannten zu füllenden Fasses unterhalb des Endes eines Eintauchstutzens plaziert ist,
- dem Absenken des Stutzens bis sich dessen Ende kurz über dem Boden des Fasses befindet,
- dem Einfüllen einer bestimmten Menge 0₁ heißen Wassers,
- dem Einfüllen einer bestimmten Menge Q₂ flüssigen weissen Phosphors,
- dem Spülen des Einfüllstutzens mit einer bestimmten Menge Q₃ heißen Wasser,
- dem Zurückziehen des Einfüllstutzens
besteht.

8. Anwendung nach Anspruch 7, in der der Abstand zwischen dem Boden des Fasses und dem Ende des Eintauchstutzens höchstens gleich 3 cm ist und bevorzugt zwischen 0,5 und 2,5 cm liegt.

9. Anwendung nach Anspruch 7, in derderZugabestrom des flüssigen weissen Phosphors veränderlich ist.

10. Anwendung nach Anspruch 9, in derderZugabestrom des flüssigen weissen Phosphors zu Füllbeginn und -ende mindestens gleich 0,8 t/h ist und bevorzugt zwischen 0,9 und 1,1 t/h liegt, und während der übrigen Füllzeit mindestens gleich 8 t/h ist und bevorzugt zwischen 9 und 11 t/h liegt.

11. Vorrichtung, die die Umsetzung des Verfahrens nach einem der Ansprüche 1 bis 10 erlaubt, wobei die genannte Vorrichtung aus einem Verteilerkopf (1), bestückt mit mindestens einem äußerst senkrechten Eintauchstutzen (2), und Armaturen zur Positionierung eines zu füllenden Fasses besteht, so daß sich mindestens eine der Öffnungen des genannten Fasses unterhalb des Eintauchstutzens befindet, dadurch gekennzeichnet, daß der Verteilerkopf aus mindestens drei Ventilen (3), (4) und (5) besteht, von denen zwei, mindestens (3) und (4), über Zuführungen (6) und (7) mit Verbindungsstücken (8) und (9) verbunden werden können, die die Versorgung des genannten Verteilerkopfes (1) mit der dichteren beziehungsweise der weniger dichten Flüssigkeit gestatten, und mindestens einem als Auslaßventil bezeichneten Ventil (5), das mit dem Eintauchstutzen (2) und den Ventilen (3) und (4) über eine Zuleitung (10) verbunden ist, und daß die Vorrichtung Armaturen besitzt, die eine solche Führung des genannten Einfüllstutzens gestatten, daß dessen Ende sich kurz über dem Boden des Fasses befindet, Armaturen, die wiederum die aufeinanderfolgende Bedienung der Ventile gestatten, die die Einfüllung einer bestimmten Menge 0₁ einer weniger dichten Flüssigkeit, dann einer bestimmten Menge Q₂ einer dichteren Flüssigkeit und schließlich die Einfüllung einer bestimmten Menge Q₃ einer weniger dichten Flüssigkeit zur Spülung des Einfüllstutzens gestattet, sowie Armaturen zum Zurückziehen des Eintauchstutzens.

12. Vorrichtung nach Anspruch 11, dadurch gekennzeichnet, daß der Verteilerkopf (1) in einer Kammer (12) untergebracht ist, die mit Verbindungsstücken (17) und (18) versehen ist, die jeweils an äußere Zuleitungen (19) und (20) und über bewegliche Zuleitungen (21) und (22) an die Verbindungsstücke (8) und (9) verbunden sind.

13. Vorrichtung nach Anspruch 12, dadurch gekennzeichnet, daß die Kammer (12) mit einer Waage (16) ausgerüstet ist.

14. Vorrichtung nach einem der Ansprüche 11 und 12, dadurch gekennzeichnet, daß der Verteilerkopf(1) an einer Winde (11) befestigt ist.

15. Vorrichtung nach Anspruch 12, dadurch gekennzeichnet, daß vor dem Verbindungsstück (17) ein Messgerät zur Bestimmung des Massenzustroms (23) angebracht ist.

16. Vorrichtung nach Anspruch 12, dadurch gekennzeichnet, daß vor dem Verbindungsstück (18) ein Wasserzähler (24) angebracht ist.

## Claims

1. Method for filling drums with two immiscible mutually inert liquids, whereby the said drum to be filled is positioned in such a manner that at least one of the openings of the said drum is beneath a hollow filling rod, characterised in that it consists in inserting this hollow filling rod in such a manner that its end is close to the bottom of the drum, in injecting a specified quantity Q1 of the less dense liquid, then in injecting a quantity Q2 of the denser liquid and subsequently in rinsing the hollow filling rod with a specified quantity Q3 of the less dense liquid and in withdrawing the hollow filling rod.

2. Method according to Claim 1, characterised in that the drum to be filled is previously disposed on a weighing unit.

3. Method according to Claim 1, characterised in that the hollow filling rod is withdrawn first of all partially and then completely.

4. Application of the method according to any one of Claims 1 to 3 to the filling of drums with two liquids, the denser of one of which is oxidisable.

5. Application according to Claim 4, in which the denser liquid is liquid white phosphorus.

6. Application of the method according to any one of Claims 1 to 3 to the filling of drums with liquid white phosphorus and water.

7. Application according to Claim 6 in which the filling of a drum with liquid white phosphorus and water consists in:
disposing a drum on a weighing unit in such a manner that at least one of the openings of the said drum to be filled is placed beneath the end of a hollow immersion rod,
lowering the hollow rod until its end is close to the bottom of the drum,
discharging a specified quantity Q1 of hot water,
discharging a specified quantity Q2 of liquid white phosphorus,
rinsing the hollow filling rod with a specified quantity Q3 of hot water,
withdrawing the hollow filling rod.

8. Application according to Claim 7 in which the distance between the bottom of the drum and the end of the hollow immersion rod does not exceed 3 cm and preferably is between 0.5 cm and 2.5 cm.

9. Application according to Claim 7 in which the flow rate of liquid white phosphorus is variable.

10. Application according to Claim 9 in which the flow rate of liquid white phosphorus at the beginning and the end of filling is not less than 0.8 t/h and preferably is between 0.9 t/h and 1.1 t/h, and during the rest of the filling time is not less than 8 t/h and preferably is between 9 t/h and 11 t/h.

11. Device permitting the implementation of the method according to any one of Claims 1 to 10, the said device being comprising a dispensing head (1), provided with at least one hollow immersion rod (2) which is substantially vertical and means for positioning a drum for filling in such a way that at least one of the openings of the said drum is beneath the hollow immersion rod, characterised in that the dispensing head comprises at least three valves (3), (4) and (5), at least two (3) and (4) of which may be connected via pipes (6) and (7) to connecting elements (8) and (9) permitting the supply of the said dispensing head (1) respectively with the denser liquid and the less dense liquid and at least one valve (5) - called outlet valve - connected to the hollow immersion rod (2) and to the valves (3) and (4) via a pipe (10), and in that the device comprises means for advancing the said hollow immersion rod in such a way that its end is close to the bottom of the drum, means for the sequential control of the valves for injecting a specified quantity Q1 of the less dense liquid, then injecting a specified quantity Q2 of the denser liquid and finally injecting a specified quantity Q3 of the less dense liquid in order to rinse out the hollow immersion rod, and means forwithdrawing the hollow immersion rod.

12. Device according to Claim 11, characterised in that the dispensing head (1) is disposed in a cabin (12), provided with connecting elements (17) and (18) connected respectively to external pipes (19) and (20) and to the connecting elements (8) and (9) via hoses (21) and (22).

13. Device according to Claim 12, characterised in that the cabin (12) is provided with a weighing machine (16).

14. Device according to either one of Claims 11 and 12, characterised in that the dispensing head (1) is fixed to an actuator (11).

15. Device according to Claim 12, characterised in that a mass flowmeter (23) is placed in front of the connecting element (17).

16. Device according to Claim 12, characterised in that a meter (24) is placed in front of the connecting element (18).
